# FASCICULE DE BREVET EUROPEEN

(11) **EP 3 646 215 B1**
(45) Date de publication et mention de la délivrance du brevet: **24.11.2021**
(21) Numéro de dépôt: 18749446.3
(22) Date de dépôt: 22.06.2018
(51) Int. Cl.: G06F 21/44

(54) **PROCÉDÉ DE CONTRÔLE D'ACCÈS À UN MODULE DE SÉCURITÉ**
VERFAHREN ZUR STEUERUNG DES ZUGRIFFS AUF EIN SICHERHEITSMODUL
METHOD FOR CONTROLLING ACCESS TO A SECURITY MODULE

(30) Priorité: 26.06.2017 FR 1755844
(43) Date de publication de la demande: 06.05.2020
(73) Titulaire: ORANGE, 92130 Issy-les-Moulineaux (FR)
(72) Inventeur: FILIPIAK, Alicia, 92326 Châtillon Cedex (FR); GHAROUT, Saïd, 92326 Châtillon Cedex (FR)
(86) Numéro de dépôt international: PCT/FR2018/051525
(87) Numéro de publication internationale: WO 2019/002733

(56) Documents cités:
- US-A1- 2009 202 078
- US-A1- 2013 067 533
- Olga Gadyatskaya ET AL: "Security-by-Contract for Open Multi-Application Smart Cards", e-Smart'2011, 23 septembre 2011 (2011-09-23), XP055419079, Extrait de l'Internet: URL:http://disi.unitn.it/~gadyatskaya/docs /eSmartGadyatskaya.pdf [extrait le 2017-10-25]
- BESSON FRÉDÉRIC ET AL: "SawjaCard: A Static Analysis Tool for Certifying Java Card Applications", 11 septembre 2014 (2014-09-11), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 51 - 67, XP047298912, ISSN: 0302-9743 ISBN: 978-3-642-27168-7 page 51 - page 65

## Description

La présente invention concerne un procédé de contrôle d'accès d'une application d'un terminal mobile à un module de sécurité compris dans le terminal.

Elle trouve une application particulièrement intéressante dans l'exécution de services sensibles tels que par exemple des services de paiement mobile pour lesquels l'exécution d'opérations sensibles nécessite de contrôler l'accès, depuis le système d'exploitation du terminal mobile qui exécute une application du terminal mobile, à des applications comprises dans le module de sécurité et habituellement appelées « applets ». L'application comprise dans le terminal mobile fait appel à des applets du module de sécurité afin de réaliser certaines opérations de sécurité, telles que par exemple une opération de signature cryptographique, une opération de vérification d'un code PIN (pour « Personal Identification Number »), etc.

La communication entre une application du terminal mobile et le module de sécurité est définie au moyen d'une interface appelée Open Mobile API, définie par un consortium industriel appelé SIMAlliance ; l'interface Open Mobile API est maintenue par l'association GlobalPlatform. Cette interface permet de déterminer si une application du terminal mobile est autorisée à accéder au module sécurité, plus précisément à dialoguer avec une applet du terminal mobile, et de garantir que l'accès à une fonctionnalité du module de sécurité est limité à ce qui est nécessaire au bon fonctionnement de l'application. Le schéma de contrôle d'accès supporté par l'interface OpenMobile API a quant à lui été spécifié par l'association GlobalPlatform. Le contrôle d'accès défini par GlobalPlatform repose sur un standard connu et normalisé, appelé PKCS#15 (« Public Key Crytpography Standards ») qui permet à des utilisateurs de périphériques cryptographiques qui renferment des clés cryptographiques de s'identifier auprès des applications, indépendamment de l'implémentation de l'interface du périphérique cryptographique. GlobalPlatform définit également l'ensemble des règles présentes sur le module de sécurité qui déterminent ce qu'une application a le droit ou non de demander au module de sécurité. Par exemple, une règle peut préciser qu'une application X, présente sur le terminal mobile est autorisée à interagir avec une applet Y, présente sur le module de sécurité, identifiée par un identifiant d'applet normalisé désigné par «AID» (pour « Application IDentifier »), et présente dans le module de sécurité. L'identifiant d'applet AID permet d'identifier de manière unique le fournisseur de l'applet ainsi que cette applet chez ce fournisseur.

L'interface Open Mobile API, ou « OMAPI », décrit une interface permettant la communication entre une application du terminal mobile et une applet du module de sécurité. Cette interface est indépendante du système d'exploitation du terminal mobile. Une application mobile installée dans le terminal mobile interroge, via l'interface OMAPI, une applet comprise dans le module de sécurité. A cette fin, le module de sécurité mémorise une table de correspondance définie par l'entité qui a émis le module de sécurité, par exemple un opérateur de réseau ou un administrateur du module, et qui comprend un ensemble de règles qui associe un identifiant d'applet du module de sécurité à une valeur de contrôle qui permet de vérifier qu'une application du terminal mobile est autorisée à interagir avec l'applet. Cette table de correspondance est récupérée au niveau du terminal mobile par l'interface OMAPI qui la consulte à chaque requête d'accès au module de sécurité émise par une application. La récupération de la table de correspondance qui contient les règles de contrôle d'accès peut se faire également en interrogeant une applet dans le module de sécurité appelée « ARA-M » (pour «Access Rule Application Master»), spécifiée par GlobalPlatform. C'est donc au niveau de cette interface que se fait le contrôle d'identification et de droit d'accès de l'application.

La valeur de contrôle qui permet de contrôler qu'une application du terminal mobile est autorisée à accéder au module de sécurité comprend le résultat d'une fonction de hachage appliquée à une valeur fournie par le développeur de l'application. Actuellement, le développeur fournit comme valeur soit une empreinte numérique (ou «hash» en anglais) de son propre certificat de développeur, c'est-à-dire de l'ensemble des champs qui composent son certificat, soit une empreinte numérique du certificat de l'application. Le contrôle d'accès consiste alors à vérifier que la valeur de contrôle qui est présente dans la table de correspondance est égale à une valeur de contrôle courante calculée à partir d'informations associées à l'application qui s'exécute et qui souhaite communiquer avec le module de sécurité. A noter que les mécanismes de contrôle d'accès peuvent se contenter de vérifier une empreinte numérique car le certificat à partir duquel l'empreinte a été calculée a déjà été vérifié par le système d'exploitation lors de l'installation de l'application ; son intégrité est donc garantie.

Dans le premier cas où le développeur fournit l'empreinte de son propre certificat de développeur, si plusieurs applications développées par le même développeur sont installées sur le terminal mobile, alors les autorisations d'accès au module de sécurité sont partagées par l'ensemble des applications concernées, quand bien même certaines de ces applications n'auraient aucun besoin d'accéder au module de sécurité. Cela constitue une vulnérabilité pouvant créer une faille de sécurité. En effet, un opérateur ou un fournisseur de services pourrait dans certains cas sous-traiter le développement de ses applications à des tiers. Au final, les différentes applications sont signées ou validées en utilisant le même certificat développeur, en l'espèce celui de l'opérateur ou du fournisseur de service. Il n'est donc pas exclu que certaines des applications développées par des tiers dévient de leurs fonctionnement normal et tentent, volontairement ou par erreur, de dialoguer avec des applets du module de sécurité, alors que cela n'a pas été spécifié initialement.

Dans le deuxième cas où le champ qui identifie une application correspond à l'empreinte numérique du certificat de l'application, alors chaque modification de l'application nécessite pour l'opérateur de procéder à une mise à jour à distance de la table de correspondance présente dans le module de sécurité. En effet, la mise à jour d'une application, telle qu'un changement de version, entraîne la génération d'un nouveau certificat associé à l'application et donc une modification de l'empreinte numérique du certificat. La mise à jour à distance de modules de sécurité par l'opérateur est cependant une opération coûteuse qu'il convient de limiter, surtout dans le cas où le nombre de modules à mettre à jour est important.

Le document "Security-by-Contract for Open Multi-Application Smart Cards", Olga Gadyatskaya et A1. présente une solution de sécurisation d'une carte à puce multi-applications. Les applications sont susceptibles d'interagir pour fournir un service donné et pour s'assurer que les interactions entre applications de la carte sont autorisées/contrôlées .

Un des buts de l'invention est de remédier à des insuffisances/inconvénients de l'état de la technique et/ou d'y apporter des améliorations. La présente invention est définie par les revendications indépendantes ci-jointes.

A cette fin, l'invention propose un procédé de contrôle d'accès à un module de sécurité d'un terminal mobile par une application du terminal mobile, ledit procédé comprenant :
- envoi par une application courante du terminal mobile d'une requête d'accès au module de sécurité, ladite requête d'accès comprenant l'identifiant courant d'une applet comprise dans le module de sécurité,
- lecture par le système d'exploitation du terminal mobile d'une table de correspondance comprenant un ensemble de règles de contrôle d'accès, une règle de contrôle d'accès comprenant l'identifiant d'une applet du module de sécurité associé à une valeur de contrôle pour une application du terminal mobile, ladite règle de contrôle d'accès indiquant que ladite application du terminal mobile est autorisée à communiquer avec l'applet du module de sécurité,
- obtention d'une valeur de contrôle courante pour l'application courante à partir d'au moins un certificat d'un développeur de l'application courante et d'un identifiant de l'application courante, associés à l'application courante,
- recherche dans la table de correspondance d'une règle de contrôle d'accès comprenant l'identifiant courant de l'applet associé à la valeur de contrôle courante, l'application courante étant autorisé à communiquer avec l'applet courante lorsque la recherche est positive.

En associant à l'identifiant d'une applet du module de sécurité une valeur de contrôle pour une application obtenue à partir du certificat du développeur de l'application et de l'identifiant de l'application, on limite de manière stricte et rigoureuse ce que peut demander l'application du terminal mobile au module de sécurité. En effet, la valeur de contrôle de l'application du terminal mobile, qui dépend du développeur, est également propre à l'application de par sa dépendance à un identifiant unique de l'application. Ainsi, même si un développeur fournit une pluralité d'applications au terminal mobile, la façon dont la valeur de contrôle associée à l'application est obtenue permet de distinguer les différentes applications développées par ce développeur. Ainsi une application qui n'a pas besoin d'accéder au module de sécurité ne se voit pas accorder un droit d'accès au module de sécurité du fait du développeur qui en est à l'origine. Par ailleurs, même si un développeur mal intentionné parvient à forger l'identifiant d'une application autorisée à communiquer avec le module de sécurité, la dépendance de la valeur de contrôle au certificat du développeur ne permettra pas une communication de l'application développée par ce développeur avec le module de sécurité.

Par ailleurs, l'utilisation d'un identifiant de l'application dans la valeur de contrôle, qui permet de limiter l'accès au module de sécurité à cette seule application, garantit une certaine pérennité de l'entrée de la table de correspondance lors d'un changement de version de l'application sur le terminal mobile. En effet, lorsqu'une nouvelle version de l'application est chargée sur le terminal mobile, il n'est pas nécessaire de mettre à jour l'entrée de la table de correspondance au niveau du module de sécurité puisque même si le code de l'application du terminal mobile a été mis à jour, l'identifiant de l'application est resté le même. Cela évite des procédures coûteuses de mise à jour à distance du module de sécurité lorsque la valeur de contrôle est fonction du certificat de l'application, un nouveau certificat étant réémis pour l'application à chaque changement de version de cette application. Cela est d'autant plus vrai que le nombre de modules de sécurité à mettre à jour est important.

Dans un premier exemple de réalisation, la valeur de contrôle courante est obtenue par concaténation d'une empreinte numérique du certificat du développeur de l'application courante et de l'identifiant de l'application courante.

Dans cet exemple de réalisation, l'espace mémoire est optimisé. En effet, l'espace dans la table de correspondance dédié au stockage de la valeur de contrôle est limité, ce qui peut nécessiter de tronquer la valeur de contrôle. Une telle troncature se fait au détriment de la sécurité. En effet, le risque que deux valeurs de contrôle de deux applications différentes soient égales ne peut être écarté.

Dans un deuxième exemple de réalisation, la valeur de contrôle courante comprend dans un premier champ une empreinte numérique du certificat du développeur de l'application courante et dans un deuxième champ l'identifiant de l'application courante.

Dans cet exemple de réalisation, qui correspond à un autre choix d'implémentation de la table de correspondance, la sécurité est optimisée. En effet, les risques d'obtenir deux entrées de la table de correspondance identiques pour deux applications différentes est réduit au minimum.

Dans un autre exemple de réalisation, la valeur de contrôle courante est obtenue à partir d'une signature numérique du certificat du développeur de l'application courante et de l'identifiant de l'application courante.

Dans cet exemple, la valeur de contrôle, qui est obtenue à partir de la signature du certificat du développeur de l'application courante et de l'identifiant de l'application courante, renforce la sécurité dans le sens où la valeur de contrôle intègre le lien entre l'Autorité de Certification et le développeur. A noter que le système d'exploitation met en œuvre une vérification de l'application, i.e., de la signature du certificat au moyen de la clé publique de l'Autorité de Certification qui a délivré le certificat, au moment de l'installation de celle-ci sur le terminal mobile. Bien sûr, dans le cas de certificats auto-signés, l'Autorité de Certification est la développeur.

Dans un exemple de réalisation, la table de correspondance est une structure de données conforme au format PKCS#15.

La table de correspondance est une entrée du fichier PKCS#15 du terminal mobile. PKCS#15 est un format standard approuvé utilisé pour le transfert de données sensibles entre une application et un périphérique de type module de sécurité. Ainsi, la table de correspondance est adaptée à tout type de terminal mobile.

L'invention concerne aussi un terminal mobile comprenant une application apte à demander à communiquer avec une applet d'un module de sécurité du terminal mobile, ledit terminal mobile comprenant :
- moyens d'envoi, agencés pour qu'une application courante du terminal mobile envoie une requête d'accès au module de sécurité, ladite requête d'accès comprenant l'identifiant courant d'une applet comprise dans le module de sécurité,
- moyens de lecture, agencés pour que le système d'exploitation du terminal mobile lise d'une table de correspondance comprenant un ensemble de règles de contrôle d'accès, une règle de contrôle d'accès comprenant l'identifiant d'une applet du module de sécurité associé à une valeur de contrôle pour une application du terminal mobile, ladite règle de contrôle d'accès indiquant que ladite application du terminal mobile est autorisée à communiquer avec l'applet du module de sécurité,
- moyens d'obtention, agencés pour obtenir une valeur de contrôle courante pour l'application courante à partir d'au moins un certificat d'un développeur de l'application courante et d'un identifiant de l'application courante, associés à l'application courante,
- moyens de recherche, agencés pour rechercher dans la table de correspondance d'une règle de contrôle d'accès comprenant l'identifiant courant de l'applet associé à la valeur de contrôle courante, l'application courante étant autorisée à communiquer avec à l'applet courante lorsque la recherche est positive.

L'invention concerne également un programme d'ordinateur sur un support de données et chargeable dans la mémoire d'un terminal mobile, le programme comprenant des portions de code pour l'exécution des étapes du procédé de contrôle d'accès décrit précédemment, lorsque le programme est exécuté sur ledit terminal mobile.

L'invention concerne aussi un support de données dans lequel est enregistré le programme ci-dessus.

D'autres caractéristiques et avantages de la présente invention seront mieux compris de la description et des dessins annexés parmi lesquels :
- la figure 1 présente les étapes d'un procédé de contrôle d'accès à un module de sécurité par une application du terminal mobile, selon un exemple de réalisation ;
- la figure 2 est une représentation schématique d'un terminal mobile apte à mettre en œuvre le procédé de contrôle d'accès, selon un exemple de réalisation de l'invention.

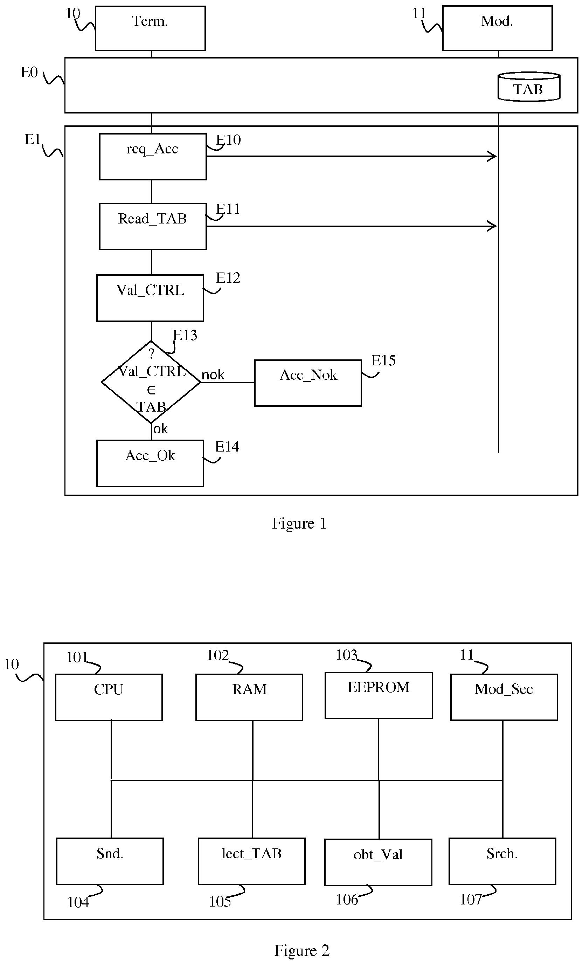

Les étapes d'un procédé de contrôle d'accès à un module de sécurité par une application du terminal mobile, selon un exemple de réalisation, vont maintenant être décrites en relation avec la figure 1.

Un terminal mobile 10 est équipé d'un module de sécurité 11, embarqué ou pas, ou (e)SIM (pour « (embedded) Subscriber Identity Module »), de type « (e)UICC » (de l'anglais « (embedded) Universal Integrated Circuit Card »). Le module de sécurité 11 est agencé pour gérer des applications opérateur qui se trouvent dans le module ou, dans le cas d'un module de type eUICC, dans un profil dédié à un opérateur. Le terminal mobile 10 est un équipement mobile grand public, par exemple un terminal intelligent de type smartphone, une tablette, etc.

Dans l'exemple de réalisation décrit ici, le module de sécurité est de type UICC, adapté pour gérer des applications d'un opérateur qui se trouvent dans le module de sécurité 11. Dans ce cas le module de sécurité 11 a été émis par l'opérateur.

Le module de sécurité 11 héberge des applications et des données confidentielles manipulées par ces applications. Ces applications comprises dans le module de sécurité s'exécutent dans un environnement dédié appelé « Java Card ». Dans ce contexte, ces applications sont habituellement appelées « applets ». C'est ce terme qui est utilisé par la suite pour désigner les applications qui s'exécutent dans le module de sécurité.

Dans une phase préalable E0 de configuration initiale du module de sécurité 11, un opérateur de réseau mobile (non représenté sur la figure 1), en charge du module de sécurité 11, configure une table de correspondance TAB pour le module de sécurité 11. La table de correspondance TAB associe une applet, identifiée par un identifiant normalisé d'applet AID (pour « Application Identifier »), à une valeur de contrôle associée à une application du terminal mobile afin d'indiquer que l'application du terminal mobile est autorisée à communiquer avec l'applet comprise dans le module de sécurité 11. En d'autres termes, la table de correspondance TAB comprend des informations qui déterminent ce que des applications du terminal mobile 10 ont le droit de demander au module de sécurité 11.

A noter qu'une application d'un terminal mobile est habituellement certifiée. Une telle certification permet de garantir à l'utilisateur du terminal l'origine de l'application lors de l'installation de celle-ci sur le terminal mobile. La certification repose en général sur des certificats électroniques de confiance, par exemple des certificats électroniques de clés publiques au format X.509. Les certificats X.509 sont supposés connus. Pour mémoire, on rappelle qu'un certificat X.509, attribué par une autorité de confiance appelée habituellement « Autorité de Certification », lie une clé publique d'un couple clé publique/clé privée à un nom, par exemple un adresse électronique, un enregistrement DNS (de l'anglais « Demain Name System »), etc., et que le certificat comprend une signature de l'ensemble des champs du certificat calculée au moyen de la clé privée de l'Autorité de Certification, détenue uniquement par cette Autorité. La vérification du certificat est ensuite effectuée au moyen de la clé publique de l'Autorité de Certification. A noter qu'il existe des certificats auto-signés. Dans ce cas, les champs du certificat sont signés au moyen de la clé privée associée à la clé publique pour laquelle le certificat a été généré. Les certificats auto-signés sont en général à usage interne. Par exemple, un opérateur de réseau peut utiliser des certificats auto-signés pour certifier des applications pour des terminaux mobiles qui comprennent des modules de sécurité qu'il a délivrés. Par exemple, l'opérateur « Orange » peut avoir un certificat développeur auto-signé pour des applications qu'il propose. A contrario, un certificat signé par une Autorité de Certification universellement reconnue, par exemple, la GSMA (pour « GSM Association ») peut être utilisé pour certifier des applications fournies par différents opérateurs et destinées à être exécutées sur un terminal mobile qui embarque un module de sécurité comprenant une pluralité de profils, chaque profil étant propre à un de ces opérateurs de réseau.

Une entité qui a développé une application pour terminal mobile et qui est appelée par la suite « développeur », par exemple « Orange », joint au code de l'application dans ce qui est communément appelée une « enveloppe de l'application », son propre certificat de développeur accompagné d'un élément de vérification de ce certificat, par exemple une empreinte numérique de l'ensemble des champs de ce certificat. L'enveloppe de l'application est comprise dans le code de l'application qui s'exécute et qui est chargé par le système d'exploitation du terminal mobile. L'empreinte numérique est obtenue par l'application d'une fonction de hachage, par exemple SHA-1 ou SHA-256 (pour « Secure Hash Algorithm »), à l'ensemble des champs du certificat tel que normalisé par exemple pour les certificats X.509 à l'IETF (pour « Internet Engineering Task Force »). La présentation de l'empreinte peut dépendre du système d'exploitation du terminal. En tout état de cause, si un seul champ du certificat est modifié, l'empreinte change. L'empreinte numérique du certificat peut ensuite être vérifiée en appliquant la même fonction de hachage à l'ensemble des champs du certificat et en comparant le résultat à l'empreinte comprise dans l'enveloppe de l'application. Dans une variante de réalisation, plus légère en termes d'implémentation, l'empreinte numérique est obtenue en appliquant une fonction de hachage à la clé publique du certificat.

Dans un autre exemple de réalisation, l'élément de vérification du certificat est la signature de l'ensemble des champs du certificat calculée au moyen de la clé privée associée à la clé publique du certificat. Dans une variante, l'élément de vérification est une signature de la clé publique du certificat calculée au moyen de la clé privée associée à la clé publique certifiée par le certificat.

La table de correspondance TAB comprend une pluralité d'entrées, chaque entrée définit une règle qui est dédiée à la communication d'une application du terminal mobile avec une applet comprise dans le module de sécurité 11. Ainsi, pour une i-ième entrée, la table de correspondance TAB comprend dans un premier champ un identifiant AIDᵢ d'une applet comprise dans le module de sécurité 11, et dans un deuxième champ une valeur de contrôle représentative d'une application APᵢ du terminal mobile 10 qui est autorisée à émettre une requête d'accès au module de sécurité 11 qui concerne l'applet AIDᵢ. La valeur de contrôle comprise dans le deuxième champ de la i-ième entrée de la table TAB est obtenue à partir d'au moins deux informations associées à l'application du terminal mobile 10. Le format de l'identifiant d'une application peut varier selon le système d'exploitation du terminal mobile 10. Il peut être propriétaire. Pour un système d'exploitation Androïd, un identifiant d'application est par exemple de la forme « com.orange.pay ». Pour un système d'exploitation iOS, un identifiant d'application est par exemple de la forme « 12345ABCDE.com.orange.pay », où la partie gauche « 12345ABCDE », correspond à un identifiant du développeur, « Orange » par exemple. A noter que ces exemples d'identifiant ne dépendent pas d'une version de l'application ou du code. Un tel format permet d'identifier de façon unique une application parmi l'ensemble des applications d'un fournisseur ou développeur d'applications, ici le développeur, ou opérateur, « Orange ».

Dans une variante de réalisation, l'identifiant de l'application est dans un format normalisé qui comprend un ensemble de champs qui ensemble identifient de manière unique et universelle l'application. Dans ce format, l'identifiant d'application est également indépendant du code et/ou de la version de l'application. A noter que lorsque l'identifiant de l'application est conforme au format d'identifiant d'application normalisé alors celui-ci comprend un champ qui identifie le développeur. La valeur de contrôle qui comprend l'empreinte du certificat du développeur permet dans ce cas de valider l'origine et l'intégrité de l'application à partir de l'identifiant de l'application en vérifiant que le champ développeur qu'il comprend correspond au développeur dont l'empreinte de certificat est fourni dans la valeur de contrôle. Ainsi, il n'est pas nécessaire de disposer d'un certificat de l'application pour contrôler l'origine et l'intégrité de l'application.

Dans un premier exemple de réalisation, la valeur de contrôle de l'application APᵢ du terminal mobile est obtenue en concaténant l'empreinte numérique des champs du certificat du développeur de l'application avec l'identifiant de l'application. Dans ce premier exemple de réalisation, l'espace mémoire est optimisé. En effet, l'espace dans la table de correspondance TAB dédié au stockage de la valeur de contrôle est limité, ce qui peut nécessiter de tronquer la valeur de contrôle. Une telle troncature se fait au détriment de la sécurité. En effet, dans ce cas le risque que deux valeurs de contrôle de deux applications différentes soient égales augmente. Dans un deuxième exemple de réalisation, la valeur de contrôle de l'application APᵢ comprend deux sous-champs : un premier sous-champ qui comprend l'empreinte numérique du certificat du développeur de l'application et un deuxième sous-champ qui comprend l'identifiant de l'application. Dans cet exemple de réalisation, la sécurité est optimisée. En effet, les risques d'obtenir deux entrées identiques dans la table de correspondance TAB pour deux applications différentes sont réduits au minimum. Dans une variante de réalisation, au lieu de l'identifiant de l'application, c'est un haché de l'identifiant de l'application, calculé au moyen d'une fonction de hachage qui est utilisé pour obtenir la valeur de contrôle de l'application APᵢ. Le haché de l'identifiant de l'application a une taille fixe, ce qui peut faciliter l'implémentation. Bien sûr, l'invention n'est pas limitée à ces exemples pour l'obtention de la valeur de contrôle.

En associant à un identifiant d'applet, ici AIDᵢ, du module de sécurité 11 une combinaison de l'empreinte numérique du certificat du développeur de l'application et de l'identifiant de l'application, on limite de manière stricte et rigoureuse ce que peut demander l'application du terminal mobile au module de sécurité 11. En effet, la valeur de contrôle de l'application APᵢ du terminal mobile qui dépend du développeur est également propre à l'application de par sa dépendance à l'identifiant de l'application. Ainsi, même si un développeur fournit une pluralité d'applications au terminal mobile, la façon dont la valeur de contrôle associée à l'application est obtenue permet de distinguer les applications de ce développeur. Par ailleurs, la présence de l'identifiant de l'application qui permet de limiter l'accès au module de sécurité à cette seule application, garantit une certaine pérennité de l'entrée de la table lors d'un changement de version de l'application sur le terminal mobile. Lorsqu'une nouvelle version de l'application est chargée sur le terminal mobile, il n'est pas nécessaire de mettre à jour l'entrée de la table de correspondance TAB. En effet, même si le code de l'application du terminal mobile a été mis à jour, l'identifiant de l'application reste le même. Cela évite ainsi des procédures complexes et coûteuses de mise à jour à distance de la table de correspondance TAB par l'opérateur.

La table de correspondance TAB ainsi créée est configurée par l'opérateur sur le module de sécurité 11 du terminal 10 en fin de phase de configuration E0. Cette configuration est mise en œuvre au moyen de procédures sécurisées connues, par exemple au moyen de procédures OTA (de l'anglais « Over The Air »), une fois le module de sécurité 11 et le terminal mobile 10 mis en circulation. Dans un autre exemple de réalisation, la configuration de la table de correspondance TAB dans le module de sécurité 11 est effectuée en usine, avant la mise en circulation du module de sécurité. Une telle configuration est adéquate pour des applications qui se trouvent par défaut sur le terminal mobile lors de sa mise en circulation ; elle évite une mise à jour a posteriori au moyen de procédures OTA, qui sont coûteuses pour l'opérateur.

Dans une phase ultérieure E1 d'utilisation, on suppose qu'une application courante APⱼ installée sur le terminal mobile 10 est exécutée, par exemple à l'initiative de l'utilisateur qui l'a sélectionnée à partir d'un menu du terminal. On suppose que l'application courante APⱼ est une application sensible qui a besoin d'exécuter une ou plusieurs applets comprises dans le module de sécurité 11.

Dans une étape E10 d'envoi d'une requête d'accès, le terminal mobile 10, plus précisément, le système d'exploitation du terminal mobile 10 qui exécute les instructions de code de l'application courante APⱼ du terminal mobile 10 qui ont été chargées en mémoire, envoie une requête d'accès sendAPDU au module de sécurité 11. La requête d'accès sendAPDU est une commande de type « send APDU» (pour « Application Protocol Data Unit »). Les messages APDU, normalisés, sont des messages habituellement échangés entre un module de sécurité et un lecteur de module. La requête d'accès comprend l'identifiant AIDⱼ d'une applet courante du module de sécurité 11 avec laquelle l'application courante APⱼ souhaite communiquer. Une telle requête d'accès envoyée au module de sécurité 11 est soumise à un contrôle d'accès. En effet, il convient de vérifier que l'application courante APⱼ du terminal mobile 10 est autorisée à demander l'exécution par le module de sécurité 11 de l'applet courante AIDⱼ qui correspond à une fonctionnalité sensible.

A cette fin, dans une étape E11 de lecture, le système d'exploitation, plus précisément une interface de contrôle d'accès, comprise dans le terminal mobile 10 et agencée pour vérifier les autorisations d'accès d'une application mobile aux applets comprises dans le module de sécurité 11 lit la table de correspondance TAB qui comprend les règles de contrôle d'accès au module de sécurité 11 et qui est mémorisée dans le module de sécurité 11. Pour mémoire, une règle de contrôle d'accès comprend l'identifiant d'une applet du module de sécurité associé à une valeur de contrôle pour une application du terminal mobile. La présence de la règle de contrôle d'accès dans la table TAB indique que l'application du terminal mobile est autorisée à dialoguer avec l' applet du module de sécurité.

Dans une étape suivante E12 d'obtention d'une valeur de contrôle courante de l'application, le système d'exploitation du terminal mobile 10, plus précisément l'interface de contrôle d'accès au module de sécurité 11 qui est exécutée par le système d'exploitation, lit à partir de données associées à l'application courante APⱼ du terminal mobile qui a envoyé la requête d'accès, une valeur de contrôle courante. La valeur de contrôle courante est comprise dans l'enveloppe de l'application courante comprise dans le code exécutable de l'application courante. C'est un élément d'information qui a été associé au code de l'application, par exemple par le développeur de l'application. Dans un exemple de réalisation, la valeur de contrôle courante est la concaténation de l'empreinte numérique des champs du certificat du développeur de l'application courante et d'un identifiant de l'application, par exemple « com.orange.pay ». Dans une variante de réalisation, l'empreinte numérique du certificat du développeur et l'identifiant de l'application sont associées à l'application en tant que deux valeurs distinctes. Dans ce cas, le système d'exploitation, plus précisément l'interface de contrôle d'accès au module de sécurité 11 concatène ces deux informations afin d'obtenir la valeur de contrôle courante pour l'application courante APⱼ.

Dans une étape suivante E13 de recherche, le système d'exploitation du terminal mobile, plus précisément l'interface de contrôle d'accès au module de sécurité 11, recherche dans la table de correspondance TAB une règle qui comprend l'identifiant de l'applet courante AIDⱼ et la valeur de contrôle courante de l'application APⱼ.

Dans un premier cas (branche «ok» sur la figure 1) où une règle qui comprend l'identifiant de l'applet AIDⱼ associée à la valeur de contrôle courante de l'application APⱼ, indiquant que l'application du terminal mobile APⱼ est autorisée à dialoguer avec l'applet AIDⱼ du module de sécurité 11, est trouvée dans la table TAB, alors dans une étape E14 d'accès, l'application APⱼ accède à l'applet AIDⱼ. Cet accès comprend l'exécution de l'applet AIDⱼ dans le module de sécurité 11 et l'envoi d'un résultat d'exécution à l'application courante APⱼ du terminal mobile 10.

Dans un deuxième cas (branche «nok» sur la figure 1) où aucune règle comprenant l'applet AIDⱼ et la valeur de contrôle courante de l'application APⱼ n'est trouvée dans la table, l'accès est refusé dans une étape E15 de fin. Un code d'erreur peut être envoyé à l'application courante du terminal mobile 10 et un message peut être affiché à l'attention de l'utilisateur sur une interface du terminal mobile 10.

La table de correspondance TAB est une structure de données qui respect le format d'un fichier PKCS#15. PKCS#15 est un format standard, approuvé, utilisé pour le transfert de données sensibles entre une application et un périphérique de type module de sécurité. Ainsi, la table de correspondance est adaptée à tout type de terminal mobile.

Dans l'exemple de réalisation décrit précédemment, la valeur de contrôle d'une application est obtenue à partir de l'empreinte des champs du certificat du développeur et de l'identifiant de l'application. L'invention n'est pas limitée à cet exemple. Ainsi, dans un autre exemple de réalisation, la valeur de contrôle est obtenue à partir d'une empreinte numérique de la clé publique du certificat et de l'identifiant de l'application. Cet exemple est plus léger en termes d'implémentation. Dans un autre exemple de réalisation, la valeur de contrôle est obtenue à partir d'une signature des champs du certificat du développeur et de l'identifiant de l'application. Enfin, dans un autre exemple de réalisation, la valeur de contrôle est obtenue à partir d'une signature de la clé publique du certificat du développeur et de l'identifiant de l'application. La prise en compte de la signature du certificat ou de la signature de la clé publique du certificat utilisation dans la valeur de contrôle implique l'Autorité de Certification.

Un terminal mobile 10, agencé pour mettre en œuvre le procédé de contrôle d'accès d'une application au module de sécurité, selon un exemple de réalisation, va maintenant être décrit en relation avec la figure 2.

Le terminal mobile 10 est un équipement mobile grand public, par exemple un terminal intelligent de type smartphone, une tablette, etc., équipé d'un module de sécurité 11 (e)SIM, de type (e)UICC. Le module de sécurité 11 est agencé pour gérer des applications opérateur qui se trouvent dans le module ou, dans le cas d'un module de type eUICC, dans un profil dédié à un opérateur.

Le terminal mobile 10 est un équipement informatique qui comprend de manière classique :
- une unité de traitement ou processeur 101, ou "CPU" (de l'anglais "Central Processing Unit"), destinée à charger des instructions en mémoire, à les exécuter, à effectuer des opérations ;
- un ensemble de mémoires, dont une mémoire volatile 102, ou "RAM" (pour "Random Access Memory") utilisée pour exécuter des instructions de code, stocker des variables, etc., et une mémoire de stockage 103 de type « EEPROM » (de l'anglais « Electrically Erasable Programmable Read Only Memory »). En particulier, la mémoire de stockage 103 est agencée pour mémoriser un module logiciel de contrôle d'accès qui comprend des instructions de code pour mettre en œuvre les étapes du procédé de contrôle d'accès tel que décrit précédemment. Le module logiciel constitue une interface d'accès au module de sécurité 11 pour les applications du terminal mobile 10. Plus précisément, lorsqu'une application du terminal mobile 10 chargée dans la mémoire du terminal mobile s'exécute et requiert l'accès à une applet du module de sécurité 11, le système d'exploitation qui exécute les instructions interagit avec le module de contrôle d'accès en tant qu'interface d'accès au module de sécurité 11.

Le terminal mobile 10 comprend également :
- un module d'envoi 104, agencé pour qu'une application courante du terminal mobile envoie une requête d'accès sendAPDU au module de sécurité 11. La requête d'accès comprend l'identifiant courant AIDⱼ d'une applet comprise dans le module de sécurité à laquelle l'application souhaite accéder. Le module d'envoi 104 est agencé pour mettre en œuvre l'étape E10 du procédé de contrôle d'accès tel que décrit précédemment ;
- un module de lecture 105, agencé pour que le système d'exploitation du terminal mobile, plus précisément l'interface d'accès au module de sécurité, lise une table de correspondance TAB comprenant un ensemble de règles de contrôle d'accès, une règle de contrôle d'accès comprenant l'identifiant d'une applet du module de sécurité associé à une valeur de contrôle pour une application du terminal mobile. La règle de contrôle d'accès qui figure dans la table de correspondance TAB indique que l'application du terminal mobile est autorisée à accéder à l'applet du module de sécurité. Le module de lecture 105 est agencé pour mettre en œuvre l'étape E11 du procédé de contrôle d'accès tel que décrit précédemment ;
- un module d'obtention 106, agencé pour obtenir une valeur de contrôle courante pour l'application courante à partir d'au moins un certificat d'un développeur de l'application courante et d'un identifiant de l'application courante, associés à l'application. Le module d'obtention 106 est agencé pour mettre en œuvre l'étape E12 du procédé de contrôle d'accès tel que décrit précédemment ;
- un module de recherche 107, agencé pour rechercher dans la table de correspondance TAB une règle de contrôle d'accès comprenant l'identifiant courant de l'applet associé à la valeur de contrôle courante, l'accès par l'application courante à l'applet courante étant autorisé lorsque la recherche est positive. Le module de recherche 107 est agencé pour mettre en œuvre l'étape E13 du procédé de contrôle d'accès tel que décrit précédemment.

Les modules d'envoi 104, de lecture 105, d'obtention 106 et de recherche sont de préférence des modules logiciels comprenant des instructions logicielles pour mettre en œuvre les étapes du procédé de contrôle d'accès tel que précédemment décrit.

L'invention concerne donc aussi :
- un programme d'ordinateur comportant des instructions pour la mise en œuvre du procédé de contrôle d'accès tel que décrit précédemment lorsque ce programme est exécuté par un processeur du terminal 10,
- un support d'enregistrement lisible sur lequel est enregistré le programme d'ordinateur décrit ci-dessus.

## Revendications

1. Procédé de contrôle d'accès à un module de sécurité (11) d'un terminal mobile (10) par une application du terminal mobile, ledit procédé comprenant :
- envoi (E10) par une application courante du terminal mobile d'une requête d'accès (sendAPDU) au module de sécurité, ladite requête d'accès comprenant l'identifiant courant (AIDⱼ) d'une applet comprise dans le module de sécurité,
- lecture (E11) par le système d'exploitation du terminal mobile d'une table de correspondance (TAB) comprenant un ensemble de règles de contrôle d'accès, une règle de contrôle d'accès comprenant l'identifiant d'une applet du module de sécurité associé à une valeur de contrôle pour une application du terminal mobile, ladite règle de contrôle d'accès indiquant que ladite application du terminal mobile est autorisée à communiquer avec l'applet du module de sécurité,
- obtention (E12) d'une valeur de contrôle courante pour l'application courante à partir d'au moins un certificat d'un développeur de l'application courante et d'un identifiant de l'application courante, associés à l'application courante,
- recherche (E13) dans la table de correspondance d'une règle de contrôle d'accès comprenant l'identifiant courant de l'applet associé à la valeur de contrôle courante, l'application courante étant autorisé à communiquer avec l'applet courante lorsque la recherche est positive.

2. Procédé selon la revendication 1, dans lequel la valeur de contrôle courante est obtenue par concaténation d'une empreinte numérique du certificat du développeur de l'application courante et de l'identifiant de l'application courante.

3. Procédé selon la revendication 1, dans lequel la valeur de contrôle courante comprend dans un premier champ une empreinte numérique du certificat du développeur de l'application courante et dans un deuxième champ l'identifiant de l'application courante.

4. Procédé selon la revendication 1, dans lequel la valeur de contrôle courante est obtenue à partir d'une signature numérique du certificat du développeur de l'application courante et de l'identifiant de l'application courante.

5. Procédé selon l'une des revendications précédentes dans lequel la table de correspondance (TAB) est une structure de données conforme au format PKCS#15.

6. Terminal mobile (10) comprenant une application apte à demander à communiquer avec une applet d'un module de sécurité du terminal mobile, ledit terminal mobile comprenant :
- moyens d'envoi (104), agencés pour qu'une application courante du terminal mobile envoie une requête d'accès au module de sécurité, ladite requête d'accès comprenant l'identifiant courant d'une applet comprise dans le module de sécurité,
- moyens de lecture (105), agencés pour que le système d'exploitation du terminal mobile lise d'une table de correspondance (TAB) comprenant un ensemble de règles de contrôle d'accès, une règle de contrôle d'accès comprenant l'identifiant d'une applet du module de sécurité associé à une valeur de contrôle pour une application du terminal mobile, ladite règle de contrôle d'accès indiquant que ladite application du terminal mobile est autorisée à communiquer avec l'applet du module de sécurité,
- moyens d'obtention (106), agencés pour obtenir une valeur de contrôle courante pour l'application courante à partir d'au moins un certificat d'un développeur de l'application courante et d'un identifiant de l'application courante, associés à l'application courante,
- moyens de recherche (107), agencés pour rechercher dans la table de correspondance d'une règle de contrôle d'accès comprenant l'identifiant courant de l'applet associé à la valeur de contrôle courante, l'application courante étant autorisée à communiquer avec à l'applet courante lorsque la recherche est positive.

7. Programme d'ordinateur sur un support de données et chargeable dans la mémoire d'un terminal mobile, le programme comprenant des portions de code pour l'exécution des étapes du procédé de contrôle d'accès selon l'une des revendications 1 à 5, lorsque le programme est exécuté sur ledit terminal mobile.

8. Support de données dans lequel est enregistré le programme selon la revendication 7.

## Patentansprüche

1. Verfahren zur Steuerung von Zugriff auf ein Sicherheitsmodul (11) eines mobilen Endgeräts (10) durch eine Anwendung des mobilen Endgeräts, das Verfahren umfassend:
- Senden (E10), durch eine aktuelle Anwendung des mobilen Endgeräts, einer Zugriffsanforderung (sendAPDU) an das Sicherheitsmodul, wobei die Zugriffsanforderung die aktuelle Kennung (AIDⱼ) eines Applets umfasst, das im Sicherheitsmodul enthalten ist,
- Lesen (E11), durch das Betriebssystem des mobilen Endgeräts, einer Entsprechungstabelle (TAB), die einen Satz von Zugriffssteuerungsregeln umfasst, wobei eine Zugriffssteuerungsregel die Kennung eines Applets des Sicherheitsmoduls umfasst, die einem Kontrollwert für eine Anwendung des mobilen Endgeräts zugeordnet ist, wobei die Zugriffssteuerungsregel angibt, dass die Anwendung des mobilen Endgeräts mit dem Applet des Sicherheitsmoduls kommunizieren darf,
- Erhalten (E12) eines aktuellen Kontrollwerts für die aktuelle Anwendung anhand mindestens eines Zertifikats eines Entwicklers der aktuellen Anwendung und einer Kennung der aktuellen Anwendung, die der aktuellen Anwendung zugeordnet sind,
- Suchen (E13) in der Entsprechungstabelle nach einer Zugriffssteuerungsregel, die die aktuelle Kennung des Applets umfasst, die dem aktuellen Kontrollwert zugeordnet ist, wobei die aktuelle Anwendung mit dem aktuellen Applet kommunizieren darf, wenn die Suche positiv ist.

2. Verfahren nach Anspruch 1, wobei der aktuelle Kontrollwert durch Verkettung eines digitalen Fingerabdrucks des Zertifikats des Entwicklers der aktuellen Anwendung und der Kennung der aktuellen Anwendung erhalten wird.

3. Verfahren nach Anspruch 1, wobei der aktuelle Kontrollwert in einem ersten Feld einen digitalen Fingerabdruck des Zertifikats des Entwicklers der aktuellen Anwendung und in einem zweiten Feld die Kennung der aktuellen Anwendung umfasst.

4. Verfahren nach Anspruch 1, wobei der aktuelle Kontrollwert anhand einer digitalen Signatur des Zertifikats des Entwicklers der aktuellen Anwendung und der Kennung der aktuellen Anwendung erhalten wird.

5. Verfahren nach einem der vorhergehenden Ansprüche, wobei die Entsprechungstabelle (TAB) eine Datenstruktur nach dem Format PKCS#15 ist.

6. Mobiles Endgerät (10) umfassend eine Anwendung, die geeignet ist, anzufordern, mit einem Applet eines Sicherheitsmoduls des mobilen Endgeräts zu kommunizieren, wobei das mobile Endgerät Folgendes umfasst:
- Sendemittel (104), die angeordnet sind, damit eine aktuelle Anwendung des mobilen Endgeräts eine Zugriffsanforderung an das Sicherheitsmodul sendet, wobei die Zugriffsanforderung die aktuelle Kennung eines Applets umfasst, das im Sicherheitsmodul enthalten ist,
- Lesemittel (105), die angeordnet sind, damit das Betriebssystem des mobilen Endgeräts eine Entsprechungstabelle (TAB) liest, die einen Satz von Zugriffssteuerungsregeln umfasst, wobei eine Zugriffssteuerungsregel die Kennung eines Applets des Sicherheitsmoduls umfasst, die einem Kontrollwert für eine Anwendung des mobilen Endgeräts zugeordnet ist, wobei die Zugriffssteuerungsregel angibt, dass die Anwendung des mobilen Endgeräts mit dem Applet des Sicherheitsmoduls kommunizieren darf,
- Mittel zum Erhalten (106), die zum Erhalten eines aktuellen Kontrollwerts für die aktuelle Anwendung anhand mindestens eines Zertifikats eines Entwicklers der aktuellen Anwendung und einer Kennung der aktuellen Anwendung, die der aktuellen Anwendung zugeordnet sind, angeordnet sind,
- Suchmittel (107), die angeordnet sind, in der Entsprechungstabelle eine Zugriffssteuerungsregel zu suchen, die die aktuelle Kennung des Applets umfasst, die dem aktuellen Kontrollwert zugeordnet ist, wobei die aktuelle Anwendung mit dem aktuellen Applet kommunizieren darf, wenn die Suche positiv ist.

7. Computerprogramm, das sich auf einem Datenträger befindet und in den Speicher eines mobilen Endgeräts geladen werden kann, das Programm umfassend Code-Abschnitte für die Durchführung der Schritte des Zugriffssteuerungsverfahrens nach einem der Ansprüche 1 bis 5, wenn das Programm auf dem mobilen Endgerät ausgeführt wird.

8. Datenträger, auf dem das Programm nach Anspruch 7 gespeichert ist.

## Claims

1. Method for controlling access to a security module (11) of a mobile terminal (10) by an application of the mobile terminal, said method comprising:
- sending (E10), by a current application of the mobile terminal, of an access request (sendAPDU) to the security module, said access request comprising the current identifier (AIDⱼ) of an applet contained in the security module,
- reading (E11), by the operating system of the mobile terminal, of a correspondence table (TAB) comprising a set of access control rules, an access control rule comprising the identifier of an applet of the security module associated with a check value for an application of the mobile terminal, said access control rule indicating that said application of the mobile terminal is authorized to communicate with the applet of the security module,
- obtaining (E12) a current check value for the current application from at least one certificate of a developer of the current application and from an identifier of the current application that are associated with the current application,
- searching (E13) in the correspondence table for an access control rule comprising the current identifier of the applet associated with the current check value, the current application being authorized to communicate with the current applet when the search is positive.

2. Method according to Claim 1, wherein the current check value is obtained by concatenating a digital fingerprint of the certificate of the developer of the current application and the identifier of the current application.

3. Method according to Claim 1, wherein the current check value comprises a digital fingerprint of the certificate of the developer of the current application in a first field and the identifier of the current application in a second field.

4. Method according to Claim 1, wherein the current check value is obtained from a digital signature of the certificate of the developer of the current application and from the identifier of the current application.

5. Method according to one of the preceding claims, wherein the correspondence table (TAB) is a data structure in accordance with the PKCS#15 format.

6. Mobile terminal (10) comprising an application able to ask to communicate with an applet of a security module of the mobile terminal, said mobile terminal comprising:
- sending means (104), designed so that a current application of the mobile terminal sends an access request to the security module, said access request comprising the current identifier of an applet contained in the security module,
- reading means (105), designed so that the operating system of the mobile terminal reads from a correspondence table (TAB) comprising a set of access control rules, an access control rule comprising the identifier of an applet of the security module associated with a check value for an application of the mobile terminal, said access control rule indicating that said application of the mobile terminal is authorized to communicate with the applet of the security module,
- obtainment means (106), designed to obtain a current check value for the current application from at least one certificate of a developer of the current application and from an identifier of the current application that are associated with the current application,
- searching means (107), designed to search in the correspondence table for an access control rule comprising the current identifier of the applet associated with the current check value, the current application being authorized to communicate with the current applet when the search is positive.

7. Computer program on a data medium and able to be loaded into the memory of a mobile terminal, the program comprising code portions for executing the steps of the access control method according to one of Claims 1 to 5 when the program is executed on said mobile terminal.

8. Data medium on which the program according to Claim 7 is recorded.
